# EUROPEAN PATENT SPECIFICATION

(11) **EP 0 918 109 B1**
(45) Date of publication and mention of the grant of the patent: **23.07.2003**
(21) Application number: 98203919.0
(22) Date of filing: 20.11.1998
(51) Int. Cl.: E02B 3/12

(54) **Method for manufacturing a supporting layer for mattress structures, and such supporting layer**
Verfahren zur Herstellung einer Trägerschicht für Matratzestrukturen, und eine solche Trägerschicht
Méthode de fabrication d'une couche de support pour des structures matelas, et une telle couche de support

(30) Priority: 21.11.1997 NL 1007598
(43) Date of publication of application: 26.05.1999
(73) Proprietor: Gouderak B.V., 2831 BR Gouderak (NL)
(72) Inventor: de Boer, Jan, Waddinxveen 2741 AE (NL)
(74) Representative: Prins, Adrianus Willem

(56) References cited:
- BE-A- 891 265
- GB-A- 2 072 734

## Description

The invention relates to a method for manufacturing a supporting layer for mattress structures, which supporting layer is composed of a water-permeable woven fabric layer provided with rows of woven-in loops for attaching a grating of weeps to the supporting layer, while on the woven fabric layer, a water-permeable protective layer from a non-woven fabric, felt or the like is fixed, and to such supporting layer.

Such supporting layer is used for arranging under water a bottom protection from stony or like material. To that end, the supporting layer is first provided with a grating of weeps, i.e. bundles of branches which give the woven fabric layer a certain buoyancy. The weeps are attached to the woven fabric layer by binding them to the loops woven into the woven fabric layer. Such supporting layer having weeps is placed on a water surface above a bottom to be protected, after which, through the provision of dumping material onto the supporting layer, the supporting layer is sunk to the desired location on the bottom under water, which is then protected against, inter alia, washing away. The dumping material may have rough, sharp edges and points which, during dumping, could damage the woven fabric layer, as a consequence of which the bottom-protection effect could at least partly be lost. To prevent damage to the woven fabric layer, this layer is provided with a protective layer, for instance from reed or a non-woven fabric. A layer of reed has the drawback that the loops are difficult to reach, while the attachment of the weeps to the reed layer may lead to the weeps breaking loose and, accordingly, to the supporting layer being loaded and sunk unevenly, as a consequence of which the supporting layer may be damaged or does not cover the surface area to be protected in the desired manner. The attachment of the non-woven fabric, felt or the like to the woven fabric layer has as a consequence that the loops are no longer accessible. Hence, for attaching the weeps, the stitching is used which secures the non-woven fabric, felt or the like to the woven fabric layer with a chain pitch. However, this has the drawback that when the supporting layer is subjected to a load, the stitching is partly pulled out, while the woven fabric layer and the non-woven fabric, felt or the like wrinkle together. Further, the stitching, located on either side of the supporting layer, may become damaged and unravel. In these cases, too, the bottom protection will not be effected in the desired manner.

The object of the invention is to manufacture a supporting layer in a manner such that when that supporting layer is used, the above problems no longer occur.

In accordance with the invention, this is achieved with a method of the type described in the opening paragraph, if in the protective layer from a non-woven fabric, felt or the like, openings are provided in at least a number of places corresponding to underlying loops. Through these features, a supporting layer can be manufactured in a simple and fast manner, to which the weeps can be rapidly and reliably attached. Moreover, this does not only yield a supporting layer of which the location of the loops is directly known, but also enables the non-woven fabric, felt or the like to be attached to the woven fabric layer in such a manner, for instance through sewing, needling or in a chemical or thermal manner, that there is no other possibility for attaching the weeps than the loops that are accessible through the openings.

Of course, it should be provided that the openings are also situated at the location of the loops. This can be realized mechanically in a simple manner if, in accordance with a further embodiment of the invention, the non-woven fabric, felt or the like is fed above the woven fabric layer and the two are attached to each other by a fastening apparatus, while prior to the fastening operation, the non-woven fabric, felt or the like is spaced apart from the woven fabric layer and provided with an opening at the location where the underlying woven fabric layer comprises a woven-in loop. As the two layers are supplied together, which layers are attached to each other downstream of the place where the openings are provided, the positioning of the layers relative to each other is always known. The same applies to the positioning of the loops, so that also the positioning of the means for providing the openings can be performed and adjusted in an accurate manner.

The openings can be provided in any manner suitable for separating a non-woven fabric, felt or the like, while one may think of punching and cutting. In accordance with a further embodiment of the invention, however, it is preferred that the openings be provided by supplying heat to the non-woven fabric, felt or the like. Through this feature, an opening large enough to render a loop easily accessible can readily be provided, while moreover, at the edge of the opening, the fibers of the non-woven fabric, felt or the like melt to and into each other and thus form a strong, non-fraying edge.

In accordance with a further embodiment of the invention, for creating an opening in the non-woven fabric, felt or the like by means of the supply of heat, it is preferred that use be made of a soldering device, more in particular a soldering device having a wedge-shaped or tapered head. Owing to these features, an opening of the desired configuration can rapidly and accurately be provided at the desired location. It is observed that when a number of such apparatus are used, a number of openings can be provided simultaneously or virtually simultaneously, while through a pivotable arrangement of those apparatus, the manufacturing process of the supporting layer can take place continuously, i.e. a non-woven fabric, felt or the like passed along such apparatus can be provided with openings at the desired locations without interrupting the displacement of the non-woven fabric, felt or the like or moving the apparatus in the direction of travel of the non-woven fabric, felt or the like.

The invention also relates to a supporting layer for mattress structures and composed of a water-permeable woven fabric layer having woven-in loops and a water-permeable protective layer from a non-woven fabric, felt or the like attached thereto, while in accordance with the invention, an opening for letting through a loop is provided in at least a number of places where the woven fabric layer is provided with loops, the openings more in particular being formed by locally treating the non-woven fabric, felt or the like with heat.

The method and supporting layer according to the invention will presently be specified, exclusively by way of example, with reference to the accompanying drawing. In this drawing:
Fig. 1 is a top plan view of a supporting layer partly without non-woven fabric and partly having weeps attached thereto; and
Fig. 2 is a schematic side elevation of a possible manufacturing method for a supporting layer.

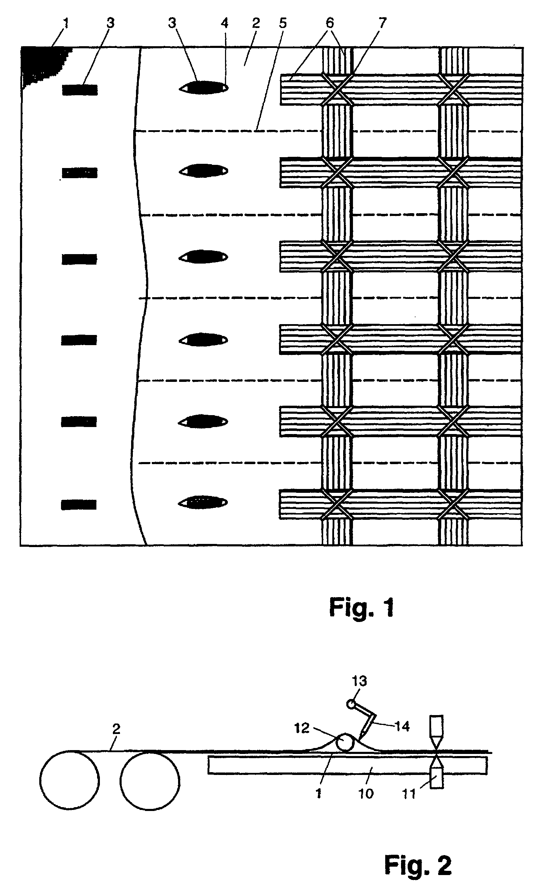

The supporting layer shown in Fig. 1 is composed of a woven fabric layer 1 and a non-woven fabric 2, cut away in the left-hand part of Fig. 1 to show the woven fabric layer 1 and the loops 3 provided thereon by weaving in. The non-woven fabric 2 is provided with openings 4 at those locations where the loops 3 are situated. The woven fabric layer 1 and the non-woven fabric 2 are interconnected by sewing seams 5.

As shown in the right-hand part of Fig. 1, weeps 6, for instance bundles of branches and/or sticks, are attached to the supporting layer in a grid pattern by means of binders 7 that are threaded through a loop 3 and, accordingly, fixedly connect the weeps 6 to the supporting layer.

Such supporting layer is used for protecting, for instance, a bottom under water. Whenever a bottom under water is mentioned hereinbelow, a bank or slope under or above water can be read as well. The supporting layer is spread out on the water surface above the bottom to be protected, while the weeps 6 keep the supporting layer afloat and spread. Next, ballast material is dumped onto the supporting layer in such a manner that the supporting layer in the spread-out position is sunk down to the bottom to be protected. In this regard, the non-woven fabric 2 serves as protective layer for the woven fabric layer 1, i.e. the non-woven fabric 2 prevents the woven fabric layer 1 from being damaged by the ballast material dumped thereon.

Fig. 2 shows a woven fabric layer 1, fed from a storage roll over a table 10 in the direction of a fastening apparatus 11. There is further shown a non-woven fabric 2 fed from a storage roll and above the woven fabric layer 1 likewise in the direction of the fastening apparatus 11. This involves the non-woven fabric 2 moving over a guide 12, for instance a rod or roller, arranged above the woven fabric layer 1, so that at the location of the guide 12 the non-woven fabric 2 is spaced from the woven fabric layer 1. At the location of the guide 12, a soldering device 14 is disposed above the non-woven fabric 2 for pivoting about an axis 13, of which soldering device the free glowing end can be positioned relative to the non-woven fabric 2 so that during displacement of the non-woven fabric 2, an elongated opening, such as an opening 4 in Fig. 1, is formed. By arranging a number of such soldering devices side by side, a web of non-woven fabric 2 is in one operation provided, throughout its width, with a number of openings corresponding to the loops of the woven fabric layer 1. Through melting of the fibers of the non-woven fabric 2, openings thus provided have a strong, non-fraying edge, while it is also easily possible to produce an opening 4 whose length and width are optimally adjusted to the underlying loop 3 of the woven fabric layer 1.

After the openings have been provided, the woven fabric layer 1 and the non-woven fabric 2 are interconnected by the fastening apparatus 11, for instance a sewing machine. This connection also situates the two layers relative to each other, so that the positions where the openings are to be provided in the non-woven fabric 2 are fixed as well. To enable adjusting or re-adjusting, the axis 13 with soldering device 14 may be arranged so as to be slidably adjustable in the direction of travel of the layers, and the soldering device 14 may be arranged to as to slidably adjustable transversely to the axis 13.

It is readily understood that within the framework of the invention as laid down in the appended claims, many modifications and variants are possible. For instance, an opening 4 need not be provided at the location of each loop 3, and those opening may also be realized by cutting or punching. Further, connecting the woven fabric layer 1 and the non-woven fabric 2 is possible in many ways other than sewing, while preferably, a fastening method be selected that does not offer any engagement possibilities for the binders 7, in which case, for attaching the weeps 6 to the supporting layer, the reliable loops 3 must in each case be used. Also, all kinds of connecting patterns other than the sewing seams 5 shown in Fig. 1 are possible between every two series of loops 3 and openings 4.

## Claims

1. A method for manufacturing a supporting layer to be used for mattress structures, said supporting layer being composed of a water-permeable woven fabric layer (1) provided with rows of woven-in loops (3) for attaching a grating of weeps (6) to the supporting layer, while on the woven fabric layer (1), a water-permeable protective layer from a non-woven fabric (2), felt or the like is fixed, **characterized in that** in the protective layer from a non-woven fabric (2), felt or the like, openings (4) are provided in at least a number of places corresponding to underlying loops (3).

2. A method according to claim 1, **characterized in that** the non-woven fabric (2), felt or the like is fed above the woven fabric layer (1) and the two are attached to each other by a fastening apparatus (11), while prior to the fastening operation, the non-woven fabric (2), felt or the like is spaced apart from the woven fabric layer (1) and provided with an opening (4) at the location where the underlying woven fabric layer (1) comprises a woven-in loop (3).

3. A method according to claim 1 or 2, **characterized in that** the openings (4) are provided by locally supplying heat to the non-woven fabric (2), felt or the like.

4. A method according to claim 3, **characterized in that** the heat is supplied by a soldering device (14).

5. A method according to claim 4, **characterized in that** a soldering device (14) having a wedge-shaped or tapered head is used.

6. A method according to any one of the preceding claims, **characterized in that** the non-woven fabric (2), felt or the like is connected to the woven fabric layer (1) by sewing, needling, in a thermal or chemical manner so that no loop-shaped parts are formed that can be pulled open.

7. A supporting layer for mattress structures and composed of a water-permeable woven fabric layer (1) having woven-in loops (3) and a water-permeable protective layer from a non-woven fabric (2), felt or the like, attached thereto, **characterized in that** in at least a number of places where the woven fabric layer (1) comprises loops (3), an opening (4) for letting through a loop (3) is provided.

8. A supporting layer according to claim 7, **characterized in that** the openings (4) are formed by locally treating the non-woven fabric (2), felt or the like with heat.

## Patentansprüche

1. Verfahren zur Herstellung einer Trägerschicht für Matratzenstrukturen, welche Trägerschicht besteht aus: einer wasserdurchlässigen Gewebelage (1), die mit Reihen von eingewebten Schlaufen (3) versehen ist, um ein Lochgitter (6) an der Trägerschicht zu befestigen, während an der Gewebelage (1) eine wasserdurchlässige Schutzschicht aus einem Vlies (2), Filz od.dgl. befestigt ist, **dadurch gekennzeichnet, dass** in der Schutzschicht aus einem Vlies (2), Filz od.dgl. Öffnungen (4) an wenigstens einigen der Stellen angeordnet sind, die den darunter liegenden Schlaufen (3) entsprechen.

2. Verfahren nach Anspruch 1, **dadurch gekennzeichnet, dass** die Schutzschicht aus einem Vlies (2), Filz od.dgl. über der Gewebelage (1) zugeführt wird und die beiden miteinander mit Hilfe einer Befestigungseinrichtung (4) verbunden werden, wobei vor dem Befestigungsschritt die Schutzschicht aus einem Vlies (2), Filz od.dgl.von der Gewebelage (1) im Abstand gehalten und mit einer Öffnung (4) an der Stelle versehen wird, an der die darunter liegende Gewebelage (1) eine eingewebte Schlaufe (3) aufweist.

3. Verfahren nach Anspruch 1 oder 2, **dadurch gekennzeichnet, dass** die Öffnungen (4) durch die örtliche Anwendung von Hitze auf die Schutzschicht aus einem Vlies (2), Filz od.dgl, gebildet werden.

4. Verfahren nach Anspruch 3, **dadurch gekennzeichnet, dass** die Hitze von einer Lötvorrichtung (14) geliefert wird.

5. Verfahren nach Anspruch 4, **dadurch gekennzeichnet, dass** die Lötvorrichtung (14) einen keilförmigen oder konischen Kopf aufweist.

6. Verfahren nach einem der vorhergehenden Ansprüche, **dadurch gekennzeichnet, dass** die Schutzschicht aus einem Vlies (2), Filz od.dgl. mit der Gewebelage (1) durch Nähen, Vernadeln, in thermischer oder chemischer Weise so verbunden wird, dass keine schlaufenförmigen Teile gebildet werden, die herausgezogen werden könnten.

7. Trägerschicht für Matratzenstrukturen, bestehend aus einer wasserdurchlässigen Gewebelage (1), die Reihen von eingewebten Schlaufen (3) aufweist, und einer mit ihr verbundenen, wasserdurchlässigen Schutzschicht aus einem Vlies (2), Filz od.dgl., **dadurch gekennzeichnet, dass** an wenigstens einigen der Stellen, an denen die Gewebeschicht (1) Schlaufen (3) aufweist, eine Öffnung (4) vorgesehen ist, um eine Schlaufe (3) durchtreten zu lassen.

8. Trägerschicht nach Anspruch 7, **dadurch gekennzeichnet, dass** die Öffnungen (4) durch die örtliche Hitzebehandlung der Schutzschicht aus einem Vlies (2), Filz od.dgl. gebildet sind.

## Revendications

1. Procédé de fabrication d'une couche de support devant être utilisée pour des structures de matelas, ladite couche de support étant constituée d'une couche d'étoffe tissée perméable à l'eau (1) munie de rangées de boucles tissées en dedans (3) destinées à attacher un réseau de baguettes (6) à la couche de support, tandis que sur la couche d'étoffe tissée (1), une couche de protection perméable à l'eau provenant d'une étoffe non tissée (2), de feutre ou autre, est fixée, **caractérisé en ce que** dans la couche de protection provenant d'une étoffe non tissée (2), de feutre ou autre, les ouvertures (4) sont prévues dans au moins un certain nombre d'emplacements correspondant à des boucles sous-jacentes (3).

2. Procédé selon la revendication 1, **caractérisé en ce que** l'étoffe non tissée (2), le feutre ou autre, est amené au-dessus de la couche d'étoffe tissée (1) et les deux sont attachées l'une à l'autre par un dispositif de fixation (11), tandis qu'avant l'opération de fixation, l'étoffe non tissée (2), le feutre ou autre, est espacé de la couche d'étoffe tissée (1) et munie d'une ouverture (4) à l'emplacement où la couche d'étoffe tissée sous-jacente (1) comprend une boucle tissée en dedans (3).

3. Procédé selon la revendication 1 ou 2, **caractérisé en ce que** les ouvertures (4) sont réalisées en appliquant localement de la chaleur à l'étoffe non tissée (2), au feutre ou autre.

4. Procédé selon la revendication 3, **caractérisé en ce que** la chaleur est appliquée par un dispositif de soudure (14).

5. Procédé selon la revendication 4, **caractérisé en ce qu'**un dispositif de soudure (14) comportant une tête en forme de coin ou effilée est utilisé.

6. Procédé selon l'une quelconque des revendications précédentes, **caractérisé en ce que** l'étoffe non tissée (2), le feutre ou autre est reliée à la couche d'étoffe tissée (1) par couture, par piquage, d'une manière thermique ou chimique de sorte qu'aucune partie en forme de boucle formée ne puisse s'ouvrir en tirant.

7. Couche de support destinée à des structures de matelas et constituée d'une couche d'étoffe tissée perméable à l'eau (1) comportant des boucles tissées en dedans (3) et d'une couche de protection perméable à l'eau provenant d'une étoffe non tissée (2), de feutre ou autre, attachée à celle-ci, **caractérisée en ce qu'**au moins un certain nombre d'emplacements où la couche d'étoffe tissée (1) comprend des boucles (3), une ouverture (4) destinée à laisser passer une boucle (3) est prévue.

8. Couche de support selon la revendication 7, **caractérisée en ce que** les ouvertures (4) sont formées en traitant localement l'étoffe non tissée (2), le feutre ou autre à l'aide de chaleur.
